# EUROPÄISCHE PATENTSCHRIFT

(11) **EP 4 266 009 B1**
(45) Veröffentlichungstag und Bekanntmachung des Hinweises auf die Patenterteilung: **12.06.2024**
(21) Anmeldenummer: 22169003.5
(22) Anmeldetag: 20.04.2022
(51) Int. Cl.: G01F 23/00, G01F 23/04, G01F 23/18, G01F 23/24, B06B 1/16, G01K 1/14, B06B 1/04, B06B 1/06

(54) **VORRICHTUNG UND VERFAHREN ZUM EINZIEHEN EINER MESSEINRICHTUNG IN EINE MEHRFACH GEWUNDENE FÜHRUNG**
DEVICE AND METHOD FOR DRAWING A MEASURING DEVICE INTO A MULTIPLE-WINDING GUIDE
DISPOSITIF ET PROCÉDÉ D'INSERTION D'UN DISPOSITIF DE MESURE DANS UN GUIDAGE ENROULÉ À PLUSIEURS REPRISES

(43) Veröffentlichungstag der Anmeldung: 25.10.2023
(73) Patentinhaber: JUMO Mess- und Regelgeräte GmbH, 1230 Wien (AT)
(72) Erfinder: Gmainer, Norbert Roman, 1020 Wien (AT); Hense, Klaus, 2514 Traiskirchen (AT)
(74) Vertreter: SSM Sandmair

(56) Entgegenhaltungen:
- JP-A- 2015 121 705
- US-A- 4 904 878
- US-A1- 2020 032 932

## Beschreibung

Die Erfindung betrifft eine Vorrichtung und ein Verfahren zum Einziehen einer Messeinrichtung in eine rohr- oder schlauchförmige, mehrfach gewundene Führung. Die Messeinrichtung kann der Messung einer oder mehrerer Zustandsgrößen, wie etwa Temperatur, Druck, Konzentration und/oder Volumen eines Fluids dienen. Das Fluid kann in gasförmiger oder flüssiger Form vorliegen und kann insbesondere eine kryogene Flüssigkeit sein. So betrifft die Erfindung beispielsweise das Einziehen in eine Führung, die in einem Fluidbehälter, wie etwa ein Druckbehälter oder ein Behälter für eine kryogene Flüssigkeit, angeordnet ist. Bei dem Fluidbehälter kann es sich um einen Treibstofftank für gasförmigen oder flüssigen Treibstoff, beispielsweise einen Tank für Flüssigwasserstoff oder komprimiertes Wasserstoffgas handeln. Der Tank kann stationär oder in einem Fahrzeug angeordnet sein. Im Allgemeinen wird sich der Tank allerdings noch in der Fertigung befinden und für eine Verwendung als Fahrzeugtank oder stationärer Tank vorgesehen sein.

Um Zustandsgrößen von Fluiden zu bestimmen, werden Messeinrichtungen in Fluidbehältern oder Fluidleitungen an ihrer Messstelle positioniert. Ist die Messstelle nicht unmittelbar zugänglich oder erstreckt sich eine Messeinrichtung selbst über eine größere Strecke, kann es erforderlich sein, die Messeinrichtung in eine schlauch- oder rohrförmige Führung einzuziehen, die zur Positionierung der Messeinrichtung in einem Fluidbehälter angeordnet ist. Wird die Messeinrichtung in einer Fluidleitung, wie etwa einer Rohrleitung, angeordnet, kann die Fluidleitung beim Einziehen unmittelbar auch als Führung dienen. Ist die Führung gewunden, weist also eine oder mehrere Biegungen auf, kann sich das Einziehen als schwierig erweisen. Je mehr Biegungen die Führung aufweist, je kleiner die Krümmungsradien und je größer die Winkelerstreckungen der Biegungen sind, desto problematischer gestaltet sich das Einziehen der Messeinrichtung.

Die EP 1 991 841 B1 beispielsweise offenbart einen Füllstandsensor, der in einem Behälter für eine kryogene Flüssigkeit angeordnet ist. Der Füllstandsensor umfasst eine supraleitende Leitungsstrecke, die sich in einem Führungsrohr im Behälter durch die Flüssigkeit bis in den Gasraum erstreckt. Die Leitungsstrecke wird mit einem Heizstrom beaufschlagt. Der über die Leitungsstrecke gemessene Spannungsabfall dient als Maß für den Flüssigkeitsstand im Behälter. Der Supraleiter weist eine beträchtliche Länge auf und bildet im Behälter ein "U", so dass der Füllstand auch dann korrekt bestimmt werden kann, wenn der Behälter beispielsweise in einem Fahrzeug eingebaut ist und der Flüssigkeitsspiegel aufgrund einer Kippbewegung des Fahrzeugs oder aufgrund Fliehkraft zur Horizontalen geneigt ist. US2020032932-A1 offenbart eine flexible Vorrichtung zum Erfassen des Flüssigkeitsstands, die ein Erfassungsmodul mit einer Leiterplatte und einer Vielzahl von Erfassungselementen umfasst. Die gekoppelte Baugruppe umfasst mehrere in Reihe geschaltete Verbindungsrohre. Jedes Verbindungsrohr umfasst einen Muffenabschnitt und einen Drehkopf. Der Drehkopf eines Verbindungsrohrs wird in den Muffenabschnitt eines benachbarten Verbindungsrohrs eingeführt und drehbar mit diesem verbunden. Die gekoppelte Baugruppe bildet einen Aufnahmeraum zur Aufnahme des Sensormoduls.

Es ist eine Aufgabe der Erfindung, ein zur Positionierung einer Messeinrichtung erforderliches Einziehen in eine rohr- oder schlauchförmige, gewundene Führung zu erleichtern oder überhaupt erst zu ermöglichen.

Gegenstand der Erfindung sind daher eine Vorrichtung und ein Verfahren zum Positionieren einer Messeinrichtung längs einer rohr- oder schlauchförmigen, mehrfach gewundenen Führung. Da die Vorrichtung im Rahmen der Positionierung wesentlich dem Einziehen der Messeinrichtung dient, wird sie im Folgenden als "Einziehvorrichtung" bezeichnet. Die Einziehvorrichtung umfasst einen elastisch biegsamen Vorschubstrang mit einer zum Aufbringen einer Vorschubkraft ausreichenden Schubsteifigkeit. Der Vorschubstrang ist ausreichend schubsteif, wenn er die in einem hinteren Strangbereich eingeleitete Schubkraft innerhalb der Führung über die einzuziehende Länge bis zu einem vorderen Strangende übertragen kann. Die Messeinrichtung weist einen oder mehrere Sensoren jeweils zur Messung einer physikalischen oder chemischen Messgröße, beispielsweise Temperatur, Druck, Konzentration oder Füllstand, auf. Der jeweilige Sensor ist mit dem Vorschubstrang derart verbunden, dass er Vorschubbewegungen des Vorschubstrangs mitmacht. Die Messeinrichtung ist in diesem Sinne ein Bestandteil der Einziehvorrichtung. Sie kann selbst eine gewisse Schubsteifigkeit aufweisen und mit dem Vorschubstrang so verbunden sein, dass sie einen Teil der Vorschubkraft aufnehmen und in Richtung auf ein vorderes Stirnende der Einziehvorrichtung übertragen kann. In einfachen und nicht zuletzt deshalb bevorzugten Ausführungen muss sie jedoch keinen nennenswerten oder keinerlei Beitrag zum Vorschub leisten, sondern ist mit dem Vorschubstrang nur so verbunden, dass der Vorschubstrang sie beim Vorschub mitschleppt. Die Messeinrichtung kann entweder über ihre gesamte Länge oder nur lokal, an einer oder mehreren Stellen, am Vorschubstrang fixiert sein.

Nach der Erfindung umfasst die Einziehvorrichtung einen Vibrator, der an einem vorderen Endabschnitt des Vorschubstrangs angeordnet und mit dem Vorschubstrang schubsteif verbunden ist. Im schubsteif gefügten Zustand bilden der Vorschubstrang und der Vibrator einen Schubverbund. Der Vorschubstrang kann zwar in Längsrichtung über den Vibrator vorragen und ein freies vorderes Stirnende des Schubverbunds aus Vorschubstrang und Vibrator bilden, bevorzugter ragt jedoch der Vibrator über den Vorschubstrang vor und bildet das freie vordere Stirnende des Schubverbunds. Grundsätzlich können das vordere Stirnende des Vibrators und das vordere Stirnende des Vorschubstrangs in Längsrichtung des Vorschubstrangs auch auf gleicher Höhe sein. Das freie vordere Stirnende des Schubverbunds aus Vorschubstrang und Vibrator ist zweckmäßigerweise auch das freie vordere Stirnende der Einziehvorrichtung.

Falls dennoch der Vorschubstrang über den Vibrator vorragt und somit das freie vordere Stirnende des Schubstrangs bildet, ist die schubsteife Verbindung nur so weit hinter dem vorderen Stirnende des Vorschubstrangs gebildet, dass die Vibrationsbewegung des Vibrators über die schubsteife Verbindung und den Vorschubstrang immer noch wirksam zum vorderen Stirnende des Schubverbunds übertragen wird. Die Länge, mit der der Vorschubstrang in derartigen Ausführungen über die schubsteife Verbindung vorragt, ist zweckmäßigerweise kleiner als das Zwanzigfache oder das Zehnfache einer größten Au-ßenweite des Vibrators, wobei die größte Außenweite im geraden Zustand des Vorschubstrangs quer zur Längsrichtung des Vorschubstrangs gemessen wird. Eine Rolle spielt auch die Biegenachgiebigkeit des Vorschubstrangs, der bei Ausbildung beispielsweise als schlankes Drahtseil, nicht mehr als das Dreißigfache oder das Zwanzigfache seiner Dicke über den Vibrator vorstehen sollte.

Die Einziehvorrichtung kann eine Vorschubeinrichtung zur Erzeugung der Vorschubkraft umfassen. Die Vorschubeinrichtung ist mit dem Vorschubstrang koppelbar, um die Vorschubkraft in den Vorschubstrang einleiten zu können. Die Vorschubeinrichtung kann mit dem Vorschubstrang auch permanent gekoppelt sein. Bevorzugt ist die Vorschubeinrichtung jedoch lösbar mit dem Vorschubstrang gekoppelt, und besonders bevorzugt so, dass sich der Vorschubstrang bei Abschluss des Einziehvorgangs von der Koppeleinrichtung löst. Die Vorschubeinrichtung kann einen Motor, beispielsweise einen Elektromotor, zur Erzeugung der Vorschubkraft, und eine Koppeleinrichtung zur Kopplung des Motors mit dem Vorschubstrang aufweisen. Die Koppeleinrichtung kann beispielsweise eine Spule sein, auf die der Vorschubstrang aufgewickelt ist. Beim Einziehen wird er von der Spule abgewickelt, wodurch auch die Vorschubkraft erzeugt werden kann. Vorzugsweise umfasst die Vorschubeinrichtung auch eine Motorsteuerung zur Steuerung und/oder Regelung des Motors. Die Motorsteuerung kann dazu eingerichtet sein, die Geschwindigkeit und/oder ein Drehmoment des Motors zu steuern und/oder zu regeln. Die Motorsteuerung kann allein für ein Steuern des Motors oder ein Steuern und Regeln des Motors eingerichtet sein.

Bei dem erfindungsgemäßen Verfahren wird die Einziehvorrichtung mit ihrem vorderen Stirnende voran in die Führung eingeführt und mit einer Vorschubkraft beaufschlagt und dadurch in Vorschubrichtung vorgeschoben. Der Vibrator wird bei dem Vorschieben des Vorschubstrangs mittels elektrischer Energie in Vibration versetzt. Das Vorschieben kann händisch vorgenommen werden. Bevorzugter wird der Einziehvorgang jedoch automatisiert. So kann insbesondere die vorstehend erläuterte Vorschubeinrichtung dazu verwendet werden, den Vorschubstrang in der Führung vorzuschieben. Der Vibrator und/oder der Vorschubstrang kann oder können nach dem Einziehen am erreichten Ort verbleiben.

Der Vorschubstrang kann intermittierend oder vorzugsweise permanent mit der Vorschubkraft beaufschlagt werden, bis die Messeinrichtung ihre Endposition erreicht hat.

Vorteilhaft ist, wenn die Vorschubkraft während des Einziehvorgangs überwacht wird. Der Vorschub des Vorschubstrangs kann auf Einhaltung einer konstanten Vorschubkraft gesteuert oder geregelt werden. Alternativ kann der Vorschub auf Einhaltung eines an den Verlauf der Führung angepassten, vorgegebenen Vorschubkraftprofils gesteuert oder geregelt werden. In einer bevorzugten Variante wird für die Vorschubkraft ein Maximalwert vorgegeben, und der Vorschub des Vorschubstrangs wird so gesteuert oder geregelt, dass der Maximalwert nicht überschritten wird.

In bevorzugten Ausführungen wird der Vorschubstrang mit einer vorgegebenen Vorschubgeschwindigkeit vorgeschoben. Bei Verwendung der Vorschubeinrichtung kann der Motor auf Einhaltung einer vorgegebenen Vorschubgeschwindigkeit gesteuert oder geregelt werden. Die Vorschubgeschwindigkeit kann während des Einziehens konstant sein. Sie kann stattdessen aber auch in Anpassung an den Verlauf der Führung gesteuert variiert werden. Wird für die Vorschubkraft ein Maximalwert vorgegeben, kann der Vorschubstrang mit der als konstant oder als Profil vorgegebenen Vorschubgeschwindigkeit vorgeschoben werden, solange der Maximalwert der Vorschubkraft nicht überschritten wird. Wird eine Überschreitung des Maximalwerts festgestellt, wird die Vorschubkraft reduziert, bis der Maximalwert wieder erreicht oder unterschritten wird, so dass dann die Vorschubgeschwindigkeit der Geschwindigkeitsvorgabe entsprechend wieder angepasst werden kann.

Wird die Vorschubkraft von einem Drehmotor erzeugt, kann das Drehmoment des Drehmotors an die Stelle der Vorschubkraft treten. Wie vorstehend beschrieben kann der Vorschub daher mit einer als konstant oder als Profil vorgegebenen Vorschubgeschwindigkeit vorgeschoben werden, solange der Maximalwert des Drehmoments des Motors nicht überschritten wird. Als Maß für das Drehmoment kann bei Verwendung eines Elektromotors beispielsweise dessen elektrische Leistungsaufnahme dienen.

Gelangt die Einziehvorrichtung beim Einziehen mit ihrem vorderen Ende, das bevorzugt der Vibrator bildet, zu einer Biegung der Führung, drückt sie in Vorschubrichtung gegen die Wand der Führung. Die Vorschubkraft wirkt hierbei mit einer Längskraftkomponente in Längsrichtung der Führung, aber auch mit einer Querkraftkomponente orthogonal zur Wand der Führung. Die Querkraftkomponente kann einen beträchtlichen Teil der Vorschubkraft ausmachen und kann dem Betrag nach größer als die Längskraftkomponente sein. An scharfen Biegungen kann es zu einer Blockierung der Vorschubbewegung führen, wenn nur die Vorschubkraft wirkt. Die Vibration des Vibrators lockert jedoch den Druckkontakt mit der Führung, so dass sich periodisch, der Schwingungsfrequenz des Vibrators entsprechend, kurze Phasen ergeben, in denen der Vorschub erleichtert ist. Die Einziehvorrichtung wird quasi in und durch scharfe Biegungen "geruckelt".

Die vom Vibrator erzeugten Vibrationsbewegungen können parallel und/oder transversal zur momentanen Vorschubrichtung des vorderen Stirnendes der Einziehvorrichtung weisen. Vorteilhaft ist ein Vibrator, der transversal schwingt und entsprechend transversale Vibrationen erzeugt. Grundsätzlich ist aber auch ein Vibrator verwendbar, der nur parallel zur Vorschubrichtung schwingt und dementsprechend nur longitudinale Vibrationen erzeugt. Vibratoren mit mehreren unterschiedlichen Schwingungsmoden sind ebenfalls verwendbar, wobei es vorteilhaft ist, wenn der Anteil der transversalen Vibrationen an der Schwingungs-Gesamtenergie des jeweiligen Vibrators überwiegt.

Der Vibrator kann zur Erzeugung der Vibration einen Vibrationsaktuator in Form eines Linear-Resonanz-Aktuators, Hubmagnetspulen-Aktuators oder Piezo-Aktuators aufweisen. Bevorzugt bildet jedoch ein Exzentermotor den Vibrationsaktuator. Exzentermotoren sind weit verbreitet, robust, preiswert und in für die Zwecke der Erfindung geeigneten Baugrößen im Handel erhältlich. Vorteilhaft ist auch, dass ein Exzentermotor mit dem Vorschubstrang so verbunden werden kann, dass die Drehachse der Schwungmasse des Exzentermotors parallel zur Längsrichtung des Vorschubstrangs weist und der Exzentermotor somit zumindest primär transversale Vibrationen erzeugt.

In bevorzugten Ausführungen weist der Vibrator einen Vibrationsaktuator, wie etwa den Exzentermotor, und ein den Vibrationsaktuator umgebendes Gehäuse auf. In Ausführungen, in denen das Gehäuse am Vorschubstrang so angeordnet ist, dass es beim Einziehen mit dem Innenumfang der Führung in Kontakt gelangt, ist es vorteilhaft, wenn das Gehäuse eine glatte Außenfläche zumindest in seinem potentiellen Kontaktbereich aufweist. Bildet der Vibrator das freie vordere Stirnende der Einziehvorrichtung, ist es vorteilhaft, wenn das Gehäuse des Vibrators einen vorderen Endabschnitt aufweist, der sich rund konvex, beispielsweise sphärisch, vorwölbt und das freie vordere Stirnende des Vibrators bildet. Das Gehäuse des Vibrators kann insbesondere patronenförmig sein und eine Umfangswand und an diese anschließend den besagten vorderen Endabschnitt aufweisen.

Der Vibrator ist in seinen Außenabmessungen auf den Innenquerschnitt der Führung angepasst. Hat die Führung einen Innenquerschnitt mit einer über die Länge der Führung konstanten oder kleinsten Nennweite D, beispielsweise einen kreisförmigen Innenquerschnitt mit einem Nenndurchmesser D, so ist es vorteilhaft, wenn der Vibrator eine Au-ßenweite von höchstens 0.6•D oder höchstens 0.5•D und/oder eine Außenweite von wenigstens 0.2•D oder wenigstens 0.3•D aufweist. Hinsichtlich der Begrenzung der Außenweite des Vibrators nach oben ist zu berücksichtigen, dass der Innenquerschnitt der Führung im Bereich von Biegungen kleiner als die Nennweite D sein kann. Andererseits nimmt die erzeugbare Vibrationsenergie mit der Größe des Vibrators zu, so dass die Einhaltung sowohl der Obergrenze als auch der Untergrenze einen optimalen Kompromiss darstellt. Verjüngt sich der Vibrator zu seinem vorderen Stirnende hin, so ist es vorteilhaft, wenn der Vibrator an seinem vorderen Stirnende in Form einer stumpfen Kuppe ausläuft. Eine stumpf gerundete Kuppe ist im Hinblick auf etwaige makroskopische Unregelmäßigkeiten der Innenumfangsfläche der Führung vorteilhaft, um die Gefahr eines Verhakens zu verringern. Vorteilhafterweise erreicht die Außenweite des Vibrators in einem Abstand von höchstens 0.1•D zumindest die genannte Untergrenze.

Um auch scharfe Biegungen passieren zu können, ist es zweckmäßig, wenn der Vibrator eine Länge über Alles von höchstens 2•D aufweist, wobei unter "D" wieder die vorstehend beschriebene Innenweite der Führung verstanden wird.

Der Vibrator kann mit dem Vorschubstrang stoffschlüssig, beispielsweise durch Kleben oder Schweißen, schubsteif verbunden sein. Anstelle eines Stoffschlusses kann er durch Reibschluss mit dem Vorschubstrang schubsteif verbunden sein, beispielsweise in einem Pressverbund. Grundsätzlich kann die schubsteife Verbindung auch durch Stoff- und Reibschluss in Kombination bewirkt werden.

So kann der Vorschubstrang in einer ersten Variante am Außenumfang des Vibrators mit dem Vibrator verschweißt sein, beispielsweise mittels einer oder mehrerer Punktschwei-ßungen. Dabei überlappt vorzugsweise ein vorderer Endabschnitt des Vorschubstrangs in Längsrichtung mit dem parallel zum Vorschubstrang ausgerichteten Vibrator. Der Vibrator liegt mit einem Außenumfang vorzugsweise längsseits am Vorschubstrang an. Der Vibrator ragt vorzugsweise in Vorschubrichtung über den Vorschubstrang vor, verlängert also den Vorschubstrang und bildet wegen der schubsteifen Verbindung sozusagen das vordere Stirnende des Vorschubstrangs.

Der Vorschubstrang kann in einer zweiten Variante stattdessen auch an die Rückseite des Gehäuses stumpf angeschweißt sein, soweit die dortigen Platzverhältnisse dies zulassen.

In einer dritten Variante ragt der Vorschubstrang mit seinem vorderen Ende an der Rückseite des Vibrators in das Gehäuse des Vibrators und ist im Gehäuse verpresst, beispielsweise zwischen einem Innenumfang des Gehäuses und einem Außenumfang eines im Gehäuse aufgenommenen Vibrationsaktuators. Der Vorschubstrang kann im Gehäuse zusätzlich oder anstelle der Pressverbindung auch verklebt sein.

Die erste Variante ist mit vergleichsweise geringem Aufwand prozesssicher herstellbar. Die zweite und die dritte Variante eröffnen im Vergleich mit einer Verbindung am Außenumfang des Vibrators Spielraum zur Vergrößerung der Außenweite des Vibrators, da der Vorschubstrang nicht im Bereich des Vibrators die Außenweite der Einziehvorrichtung vergrößert. Ragt der Vorschubstrang, wie etwa in der dritten Variante, an der Rückseite des Vibrators in dessen Gehäuse, kann am Außenumfang des Vorschubstrangs ein glatter Übergang geschaffen werden.

Der Vorschubstrang kann ein Drahtseil sein oder zumindest umfassen. Besonders geeignet ist ein geflochtenes Drahtseil. Das Drahtseil kann sich in Vorschubrichtung bis zum Vibrator erstrecken und im Bereich seines vorderen Endes schubsteif mit dem Vibrator verbunden sein. Das Drahtseil kann sich gegen die Vorschubrichtung so weit erstrecken, dass die Vorschubkraft in das Drahtseil einleitbar ist. Das Drahtseil erstreckt sich vorzugsweise über wenigstens einen überwiegenden Teil der Länge des Vorschubstrangs und kann sich insbesondere kontinuierlich durchgehend vom Bereich der Krafteinleitung bis zum Vibrator bzw. bis in die schubsteife Verbindung mit dem Vibrator erstrecken. Für die Übertragung der Vorschubkraft bei gleichzeitig günstiger Biegeelastizität ist ein Drahtseil aus Metall, insbesondere ein Stahldrahtseil, vorteilhaft.

Der Vorschubstrang kann mit einem die Gleitreibung verminderndem Material, wie etwa PTFE, beschichtet oder ummantelt sein. Für eine elektrische Entkopplung von der Messeinrichtung ist eine Beschichtung oder Ummantelung des Vorschubstrangs mit einem elektrisch isolierenden Material von Vorteil. Auch dies leistet PTFE. Ist der Vorschubstrang ein geflochtenes Drahtseil, können die einzelnen Drahtfasern jeweils reibungsmindernd beschichtet sein. Zusätzlich oder bevorzugt stattdessen kann ein geflochtenes Drahtseil über seinen äußeren Umfang beschichtet oder ummantelt sein.

Die Einziehvorrichtung kann eine schlauchartige Hülle umfassen, die den Vorschubstrang und die Messeinrichtung über die gesamte Länge durchgehend oder nur abschnittsweise und optional auch den Vibrator umhüllt. Die Hülle kann der Verminderung von Gleit- oder Haftreibung und/oder als Schutzhülle und/oder der Fixierung der Messeinrichtung am Vorschubstrang dienen. Die Hülle kann durchbrochen, beispielsweise perforiert und/oder geschlitzt sein, um für den Fall der Messung in einem Fluid eine gewisse Fluiddurchlässigkeit zu erhalten und das Fluid möglichst nahe zum jeweiligen Sensor zu bringen.

Anstelle eines Drahtseils kann der Vorschubstrang einen elastisch biegsamen Vorschubschlauch mit einer zum Aufbringen der Vorschubkraft ausreichenden Schubsteifigkeit umfassen, beispielsweise einen Metallwellschlauch. In derartigen Ausführungen umhüllt der Vorschubschlauch die Messeinrichtung und ist an einem vorderen Schlauchende mit dem Vibrator schubsteif verbunden. So kann sich der Vorschubschlauch bis zur Rückseite des Vibrators erstrecken und dort mit dem Vibrator schubsteif gefügt sein oder vorteilhafterweise den Vibrator einhüllen und am Außenumfang des Vibrators mit diesem schubsteif gefügt sein. Der Vibrator ragt in Längsrichtung des Vorschubschlauchs zweckmäßigerweise über diesen vor. Der Vorschubschlauch kann in einer Modifikation auch zusätzlich zu einem Drahtseil vorgesehen sein und dieses ebenfalls umhüllen. Drahtseil und Vorschubschlauch können somit auch gemeinsam den Vorschubstrang bilden und im Zusammenwirken die erforderliche Schubsteifigkeit und Biegeelastizität aufbringen.

In Ausführungen, in den der eine oder die mehreren Sensoren leitungsgebunden sind, umfasst die Messeinrichtung eine oder mehrere längs des Vorschubstrangs verlaufende elektrische und/oder optische Leitungen zur Versorgung des jeweiligen Sensors mit elektrischer Energie und/oder zur Übertragung von Signalen. Wird der Vibrator über Leitungen mit elektrischer Energie und/oder Steuersignalen versorgt, verlaufen diese elektrischen und/oder optischen Leitungen längs des Vorschubstrangs. Die jeweilige Leitung für die Sensorik und/oder den Vibrator kann integrierter Bestandteil des Vorschubstrangs sein oder neben dem Vorschubstrang verlaufen und beim Einziehen einfach mitgeschleppt werden.

Umfasst die Messeinrichtung mehrere Sensoren jeweils zur Messung einer physikalischen oder chemischen Messgröße, beispielsweise Temperatur, Druck, Konzentration oder Füllstand bzw. Volumen, können die Sensoren gleich oder unterschiedlich sein. Die Messeinrichtung kann insbesondere einen oder mehrere Temperatursensoren zur Bestimmung der Temperatur eines Fluids, beispielsweise eines Treib- oder Brennstoffs, und/oder einen oder mehrere Füllstandsensoren zur Bestimmung eines Flüssigkeitspegels eines Behälters umfassen.

Die Messeinrichtung ist in vorteilhaften Verwendungen zur Messung einer oder mehrerer Zustandsgrößen eines Fluids eingerichtet. Die Führung kann in einem Fluidbehälter angeordnet sein. Die Einziehvorrichtung kann somit als Einziehhilfe zum Einziehen der Messeinrichtung in die im Fluidbehälter erstreckte Führung verwendet werden. Der Fluidbehälter kann ein Druckbehälter für ein Druckgas, wie beispielsweise Erdgas, Biogas oder insbesondere Wasserstoff, sein. Insbesondere kann es sich um einen Behälter für eine Flüssigkeit handeln, vorzugsweise eine kryogene Flüssigkeit, wie etwa Flüssigwasserstoff. Der Fluidbehälter ist in derartigen Verwendungen Druck- und Isolationsbehälter zugleich.

Die Einzieheinrichtung eignet sich zum Einziehen der Messeinrichtung in schlanke, mehrfach gewundene Führungen beträchtlicher Länge. So kann die Führung bei einer Innenweite von unter 20 mm eine Länge von mehr als 4 m und über ihren Verlauf mehrere Biegungen mit Krümmungsradien unter 20 cm oder sogar unter 10 cm aufweisen, wobei sich diese Biegungen jeweils über einen Bogenwinkel von mehr als 70° oder 80° erstrecken können. Ist der Vorschubstrang als Metalldrahtseil gebildet, haben sich Drahtseilstärken zwischen 1 mm und 8 mm, insbesondere zwischen 1 mm und 5 mm bewährt. Das Verhältnis "Innenweite der Führung zu Stärke des Vorschubstrangs (Drahtseil)" kann insbesondere aus dem Bereich von 3:1 bis 20:1, vorzugsweise 4:1 bis 10:1, gewählt werden.

Die Führung wirkt bei der Positionierung der Messeinrichtung mit, da sie die Position(en) des oder der Sensoren durch ihren Verlauf vorgibt. Die Führung kann deshalb als ein weiterer Bestandteil der Einziehvorrichtung aufgefasst werden.

Nachfolgend werden Ausführungsbeispiele der Erfindung anhand von Figuren erläutert. An den Ausführungsbeispielen offenbar werdende Merkmale bilden jeweils einzeln und in jeder Merkmalskombination die Gegenstände der Ansprüche und auch die vorstehend erläuterten Ausgestaltungen vorteilhaft weiter. Es zeigen:
- Fig. 1: eine rohrförmige Führung mit einer Einziehvorrichtung eines ersten Ausführungsbeispiels,
- Fig. 2: einen vorderen Endabschnitt der Einziehvorrichtung einer ersten Variante,
- Fig. 3: den vorderen Endabschnitt der Einziehvorrichtung an einer Biegung der Führung,
- Fig. 4: den vorderen Endabschnitt der Einziehvorrichtung einer zweiten Variante,
- Fig. 5: den vorderen Endabschnitt der Einziehvorrichtung einer dritten Variante,
- Fig. 6: eine Einziehvorrichtung eine zweiten Ausführungsbeispiels in einem Querschnitt, und
- Fig. 7: eine Einziehvorrichtung eines dritten Ausführungsbeispiels in einem Querschnitt.

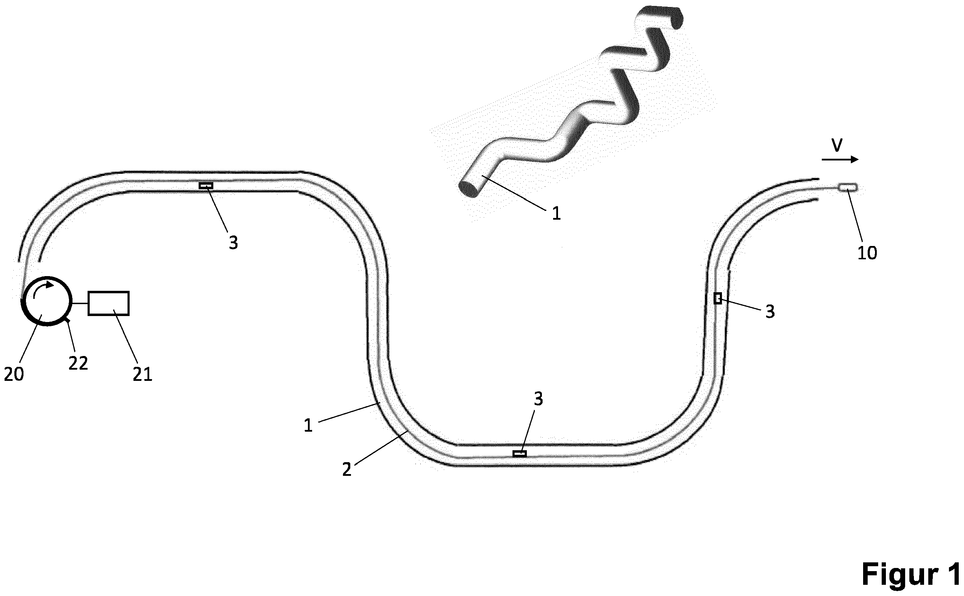

Figur 1 zeigt eine rohrförmige Führung 1 und eine in die Führung 1 eingezogene Einziehvorrichtung nach einem ersten Ausführungsbeispiel. Die Einziehvorrichtung umfasst einen Vorschubstrang 2 und einen Vibrator 10, der an einem in Vorschubrichtung V vorderen Ende des Vorschubstrangs 2 angeordnet und mit dem Vorschubstrang 2 schubsteif verbunden ist. Der Vorschubstrang 2 und der Vibrator 10 bilden einen Schubverbund. Die Einziehvorrichtung dient der Positionierung einer Messeinrichtung längs der Führung 1. Die Messeinrichtung umfasst mehrere Sensoren, von denen in Figur 1 drei Sensoren 3 dargestellt sind. Sie kann grundsätzlich aber auch mit nur einem einzigen Sensor gebildet werden.

Die Führung 1 ist mehrfach gewunden, weist also in Längsrichtung, die zugleich die Vorschubrichtung V des Vorschubstrangs 2 ist, hintereinander mehrere Biegungen auf, was durch Einblendung eines mehrfach abknickenden Abschnitts der Führung 1 veranschaulicht werden soll. Die Führung 1 kann eine Fluidleitung zur Durchleitung von Fluid sein. Sie kann stattdessen aber auch selbst primär der Positionierung der Messeinrichtung dienen und sich, wie etwa im Ausführungsbeispiel, in einem Behälter für ein Fluid erstrecken, um durch ihren Verlauf einen oder mehrere Messorte für einen oder mehrere Sensoren der Messeinrichtung im Behälter vorzugeben. Bei dem Behälter kann es sich beispielsweise um einen Treibstofftank und insbesondere um einen Tank für Flüssigwasserstoff handeln.

Die Messeinrichtung dient der Erfassung einer oder mehrerer Zustandsgrößen des Fluids, wie beispielsweise der Temperatur und/oder des Drucks und/oder des Volumens einer Flüssigphase und/oder einer Gasphase des Fluids. Die Sensoren 3 sowie optional ein oder mehrere weitere Sensoren und zugehörige Verbindungsleitungen zur Übertragung elektrischer Energie und/oder Steuersignalen und/oder Messsignalen sind am Vorschubstrang 2 so angeordnet und befestigt, dass der Vorschubstrang 2 sie bei seiner Vorschubbewegung mitnimmt bzw. mitschleppt und die Sensoren im vollständig eingezogenen Zustand des Vorschubstrangs 2 relativ zur Führung 1 und somit im Behälter ihre für die Messung vorgesehenen Positionen einnehmen. Für die Messung verbleiben die Messeinrichtung, das heißt die Sensoren und Verbindungsleitungen, und der Vorschubstrang 2 im Behälter. Der Vorschubstrang 2, der Vibrator 10 und die Messeinrichtung bilden hinsichtlich des Vorschubs eine Einheit und werden daher gemeinsam als "Einziehvorrichtung" bezeichnet. Soweit die Sensoren und/oder der Vibrator 10 leitungsgebunden sind, umfasst die Einziehvorrichtung auch die erforderlichen Verbindungsleitungen.

Für ein maschinelles Einziehen kann die Einziehvorrichtung ferner eine Vorschubeinrichtung mit einem Vorschubmotor 20 und einer Steuerungseinrichtung 21 zur Steuerung und/oder Regelung der Vorschubbewegung umfassen. In Figur 1 ist angedeutet, dass der Vorschubstrang 2 für den Vorschub von einer Rolle des Vorschubmotors 20 abgewickelt und dadurch in der Führung 1 vorgeschoben wird. Die hierfür erforderliche Vorschubkraft wird über das momentan in die Führung 1 einlaufende Ende des Vorschubstrangs 2 eingeleitet. Der Vorschubstrang 2 ist ausreichend schubsteif, so dass er unter der Einwirkung der Vorschubkraft über die Länge der Führung 1 vorgeschoben und die Einziehvorrichtung dadurch eingezogen werden kann. Andererseits ist der Vorschubstrang 2 elastisch biegsam bzw. biegeelastisch, so dass er dem Verlauf der Führung 1 folgen kann.

Die Rolle dient als Koppeleinrichtung, indem sie den Vorschubstrang 2 mit dem Vorschubmotor 20 koppelt. Die Rolle umfasst einen Anschlag 22, an dem der Vorschubstrang 2 mit einem hinteren Stirnende in einem losen Druckkontakt anliegt. Wenn Einziehvorrichtung eingezogen ist, so dass die Messeinrichtung längs der Führung 1 positioniert ist, kann die Vorschubeinrichtung einfach entfernt werden. Für das Lösen vom Vorschubstrang 2 ist kein Werkzeug erforderlich.

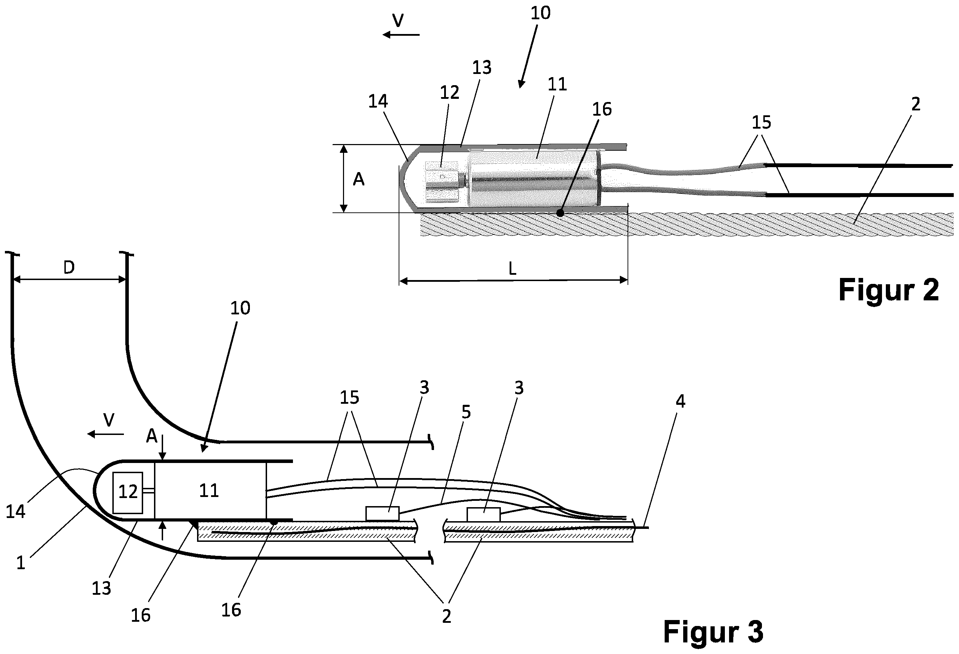

Figur 2 zeigt einen vorderen Endabschnitt der Einziehvorrichtung. Der Vorschubstrang 2 kann insbesondere ein aus mehreren Metalldrähten geflochtenes Drahtseil, beispielsweise ein Stahldrahtseil sein. Der Vibrator 10 ist am vorderen Ende des Vorschubstrangs 2 mit diesem mittels einer schubsteifen Verbindung 16 einer ersten Variante stoffschlüssig und dadurch schubsteif gefügt. Dabei ragt der Vibrator 10 in Vorschubrichtung V über den Vorschubstrang 2 vor. Aufgrund der schubsteifen Verbindung 16 bilden der Vorschubstrang 2 und der Vibrator 10 gemeinsam den Schubverbund. Der Vibrator 10 bildet das vordere Stirnende dieses Schubverbunds 2, 10 und bildet auch das vordere Stirnende der Einziehvorrichtung insgesamt.

Der Vibrator 10 umfasst einen elektrischen Drehmotor 11 mit einer in Vorschubrichtung vorragenden Motorwelle und einer drehunbeweglich an oder auf der Motorwelle angeordneten Schwungmasse 12 mit einem bezüglich der Drehachse der Motorwelle exzentrischen Massenschwerpunkt. Der Motor 11 und die Schwungmasse 12 bilden einen Exzentermotor. Der Exzentermotor 11, 12 ist in einem Gehäuse des Vibrators 10 aufgenommen. Das Gehäuse kann, wie im Ausführungsbeispiel, insbesondere patronen- oder kartuschenförmig sein und dementsprechend eine zumindest im Wesentlichen zylindrische, vorzugsweise kreiszylindrische, Umfangswand 13 aufweisen, an die sich in Vorschubrichtung ein rund nach außen vorgewölbter, kuppenförmiger Endabschnitt 14 anschließt, der das Gehäuse am vorderen Stirnende des Vibrators 10 schließt. Das Gehäuse ist über seinen gesamten äußeren Umfang und einschließlich des Endabschnitts 14 vorteilhafterweise glatt, um der Gefahr einer Blockierung durch Unebenheiten, insbesondere an scharfen Biegungen, entgegenzuwirken.

Das Gehäuse des Vibrators 10 kann an seiner Rückseite offen oder geschlossen sein. Der Exzentermotor 11, 12 ist über die Rückseite des Gehäuses 13, 14 in dieses eingeschoben und mit dem Gehäuse 11, 12 verpresst, das heißt der Motor 11 sitzt über seinen Außenumfang in einem Presssitz im Gehäuse. Von der Rückseite des Exzentermotors 11, 12 sind Verbindungsleitungen 15 weggeführt, die sich längs des Vorschubstrangs 2 bis zu einer in Bezug auf den Behälter externen Energieversorgung erstrecken, um den Exzentermotor 11, 12 während des Einziehvorgangs mit der für den Betrieb erforderlichen elektrischen Energie zu versorgen.

Der Vibrator 10 liegt mit seiner Umfangswand 13 längs des Drahtseils 2 an und ist im Kontaktbereich mittels der schubsteifen Verbindung 16 mit dem Drahtseil 2 gefügt. Die Verbindung 16 ist eine Schweißverbindung und kann insbesondere eine Punktschweißverbindung sein. Im schubsteif verbundenen Zustand weist die Drehachse des Exzentermotors 11, 12 zumindest im Wesentlichen parallel zum vorderen Endabschnitt des Vorschubstrangs 2, so dass die Drehachse des Exzentermotors 11, 12 beim Einziehen ebenfalls zumindest im Wesentlichen parallel zur Vorschubrichtung V des vorderen Stirnendes des gemeinsam gebildeten Schubverbunds 2, 10 weist.

Figur 3 zeigt den vorderen Endabschnitt der Einziehvorrichtung im Bereich einer Biegung der Führung 1. Die schubsteife Verbindung 16 umfasst einen hinteren Schweißpunkt, der das Drahtseil 2 in einem hinteren Abschnitt der Umfangswand 13 des Vibrators 10 mit diesem verbindet, und eine vordere Schweißstelle, die das vordere Stirnende des Drahtseils 2 ebenfalls mit der Umfangswand 13 verbindet. Als schubsteife Verbindung 16 würde grundsätzlich ein einziger Schweißpunkt genügen, hinsichtlich der Festigkeit und Bruchsicherheit wird jedoch eine Punktschweißverbindung mit mehreren Schweißstellen bevorzugt.

In Figur 3 sind zwei Sensoren 3 erkennbar, bei denen es sich insbesondere um Temperatursensoren handeln kann. Ferner ist ein weiterer Sensor 4 der Messeinrichtung angedeutet. Der Sensor 4 kann beispielsweise eine supraleitende Messleitung umfassen, die in Figur 3 angedeutet sein soll. Die supraleitende Messleitung kann sich über die gesamte Länge der Einziehvorrichtung erstrecken. Handelt es sich bei dem Behälter, in dem die Führung 1 angeordnet ist, um einen Tank für eine kryogene Flüssigkeit, wie etwa Flüssigwasserstoff, kann sich der Sensor 4 vorteilhafterweise bis in den Gasraum des Behälters erstrecken, um in an sich bekannter Weise einen Füllstandsensor zu bilden. Bei angepasstem Verlauf der Führung 1 und entsprechend des Sensors 4, kann mit einer supraleitenden Messleitung das Volumen der Flüssigphase auch dann bestimmt werden, wenn der Flüssigkeitspegel aufgrund Fliehkraft und/oder der Behälter als solcher zur Horizontalen geneigt ist oder sind.

Die Sensoren 3 sind mittels Messleitungen 5 mit einer außerhalb des Behälters angeordneten Auswerteelektronik verbunden. Zum Sensor 4 gehören weitere Leitungen zur Versorgung der supraleitenden Messleitung mit einem Heizstrom und zur Ableitung der Messsignale. Dieser weiteren Leitungen sind in Figur 3 nicht dargestellt. Es soll lediglich illustriert werden, dass die Messeinrichtung mehrere, auch unterschiedliche Sensoren 3 und 4 sowie zugehörige Verbindungsleitungen und die Einziehvorrichtung zusätzlich Verbindungsleitungen 15 für den Vibrator 10 aufweisen können, die bei geeigneter Befestigung am Vorschubstrang 2 von diesem beim Vorschub mitgeschleppt werden.

Für das Einziehen der Einziehvorrichtung und damit der Messeinrichtung wird ein kontinuierlicher Vorschub bevorzugt. Der Vibrator 10 kann während des Vorschubs intermittierend betrieben werden, beispielsweise stets dann eingeschaltet werden, wenn eine Erhöhung des Widerstands gegen eine weitere Vorschubbewegung festgestellt wird. In einfachen und nicht zuletzt deshalb bevorzugten Ausführungen wird der Vibrator 10 kontinuierlich durchgehend betrieben. Der Vibrator 10 führt der rotierenden Unwucht der Schwungmasse 12 entsprechend Vibrationsbewegungen zumindest primär transversal zur Vorschubrichtung V aus. Gelangt der Vibrator 10 beim Vorschub mit seinem vorderen Endabschnitt 14 in Druckkontakt mit der äußeren Wand einer Biegung der Führung 1, wird dieser Druckkontakt aufgrund der Vibrationsbewegung gelockert. Die Stärke der Drucckraft, mit der der Vibrator 10 gegen die Führung 1 drückt, oszilliert der Vibrationsbewegung entsprechend periodisch. Die Vibrationsbewegung des Vibrators 10 kann auch dazu führen, dass der vordere Endabschnitt 14 periodisch von der Führung 1 abhebt, der Druckkontakt also kurzzeitig gelöst wird. Jedenfalls wird die im Druckkontakt orthogonal zur momentanen Vorschubrichtung V wirkende Querkraftkomponente periodisch verringert und dadurch einer Blockierung der Einziehvorrichtung entgegengewirkt.

Die Vibrationsbewegung, die der Vibrator 10 ausführt, wird durch seine Reihe von Parametern bestimmt, beispielsweise durch die Masse und die äußeren Abmessungen des Vibrators 10 und die Biegeelastizität des Vorschubstrangs 2. Der Vorschubstrang 2 weist aufgrund der Forderung, dass er dem gewundenen Verlauf der Führung 1 folgen können muss, eine günstige Biegeelastizität auch für das Zulassen einer ausreichend starken Vibrationsbewegung des vorderen Stirnendes des Vibrators 10 auf.

Von Vorteil ist, wenn der Vibrator 10 als solcher über Alles gemessen eine Länge L aufweist, die nicht größer als das Doppelte der Innenweite D des Innenquerschnitts der Führung 1 ist. Falls die Führung 1 wie bevorzugt einen zumindest im Wesentlichen kreisförmigen Innenquerschnitt mit über die gesamte Länge zumindest im Wesentlichen konstantem Durchmesser aufweist, ist dieser Innendurchmesser zugleich auch die Innenweite D. Falls der Innenquerschnitt der Führung 1 nicht kreisförmig und/oder über die Länge der Führung 1 nicht konstant ist, dann ist die kleinste Innenweite der Führung 1 die Innenweite D. Wird die Führung 1 beispielsweise durch Biegeumformung aus einem geraden Rohr mit kreiszylindrischem Innenquerschnitt geformt, ist der Innendurchmesser des geraden Rohrs die Innenweite D des Innenquerschnitts. Im Verlauf einer Biegung kann eine kleinste Innenweite der Führung aufgrund der Biegeumformung kleiner als die Innenweite D des geraden Rohrs sein.

Der Vibrator 10 ist in Bezug auf seine in Vorschubrichtung V über alles gemessene Länge und/oder seine quer zur Vorschubrichtung über alles gemessene Außenweite A auf die Innenweite D abgestimmt. Zur Erzeugung ausreichend starker Vibrationen ist es vorteilhaft, wenn die Außenweite A ≥ 0.2•D oder A ≥ 0.3•D. Andererseits ist es für das Durchfahren auch enger Biegungen vorteilhaft, wenn über die Länge des Vibrators überall A ≤ 0.6•D oder A ≤ 0.5•D gilt.

Der Vibrator 10 verjüngt sich von seiner größten Außenweite A ausgehend in Vorschubrichtung V in seinem vorderen Endabschnitt 14 unter Ausbildung einer rund vorgewölbten Kuppe. Diese Kuppe kann beispielsweise sphärisch oder in anderer Weise dreidimensional rund sein. Bevorzugt wird eine flache Kuppenform. Eine langgestreckte, spitzwinkelige Verjüngung birgt das Risiko, dass die Einziehvorrichtung mit dem Vibrator 10 voran in etwaigen makroskopischen Unebenheiten am Innenumfang der Führung 1 steckenbleibt. Dieses Risiko besteht beispielsweise dann, wenn die Führung über ihre gesamte Länge oder abschnittsweise in der Art eines Wellschlauchs geformt ist. Der Vibrator 10 weitet sich in vorteilhaften Ausführungen daher von seinem vorderen Stirnende über eine vergleichsweise geringe Länge auf die Außenweite A auf. Die runde Aufweitung kann über eine Länge von vorzugsweise höchstens 0.6•A oder höchstens 0.4•A erfolgen. Entsprechend kurz und stumpf ist der vordere Endabschnitt 14.

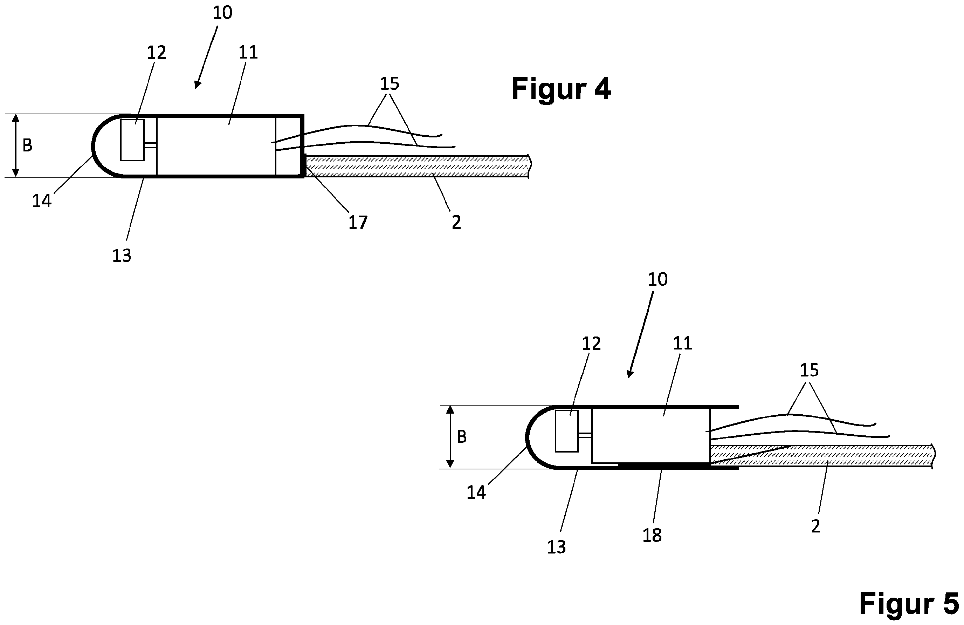

Figur 4 zeigt den vorderen Endabschnitt des Vorschubstrangs 2 mit dem Vibrator 10 in einer zweiten Variante, die sich von der in den Figuren 2 und 3 dargestellten ersten Variante nur in Bezug auf die schubsteife Verbindung unterscheidet. Im Unterschied zur ersten Variante ist der Vorschubstrang 2 mit seinem vorderen Stirnende an der rückwärtigen Stirnseite des Vibrators 10 mittels einer Schweißverbindung 17 gefügt. Um die Schweißverbindung 17 herstellen zu können, ist das Gehäuse 13, 14 des Vibrators 10 an seiner Rückseite geschlossen, weist dort also eine rückseitige Stirnwand auf, an die der Vorschubstrang 2 stumpf angeschweißt ist. Der Vorschubstrang 2 überlappt somit nicht mehr axial mit dem Vibrator 10, so dass der Vibrator 10 als solcher quer zur Vorschubrichtung V gemessen eine größere Außenweite B als in der ersten Variante aufweisen kann.

Figur 5 zeigt den vorderen Endabschnitt des Vorschubstrangs 2 mit dem schubsteif gefügten Vibrator 10 in einer zweiten Variante, die sich von der ersten Variante ebenfalls nur in Bezug auf die schubsteife Verbindung und optional hinsichtlich der Außenweite B unterscheidet. Das Gehäuse 13, 14 des Vibrators 10 ist wie beim Vibrator 10 der ersten Variante rückseitig offen. Der Vorschubstrang 2 ragt über die rückseitig offene Stirnseite in das Gehäuse 13, 14 hinein und ist im Ringspalt zwischen der Gehäuseumfangswand 13 und dem Motor 11 verpresst. Die so erhaltene Pressverbindung 18 verbindet den Vibrator 10 schubsteif mit dem Vorschubstrang 2.

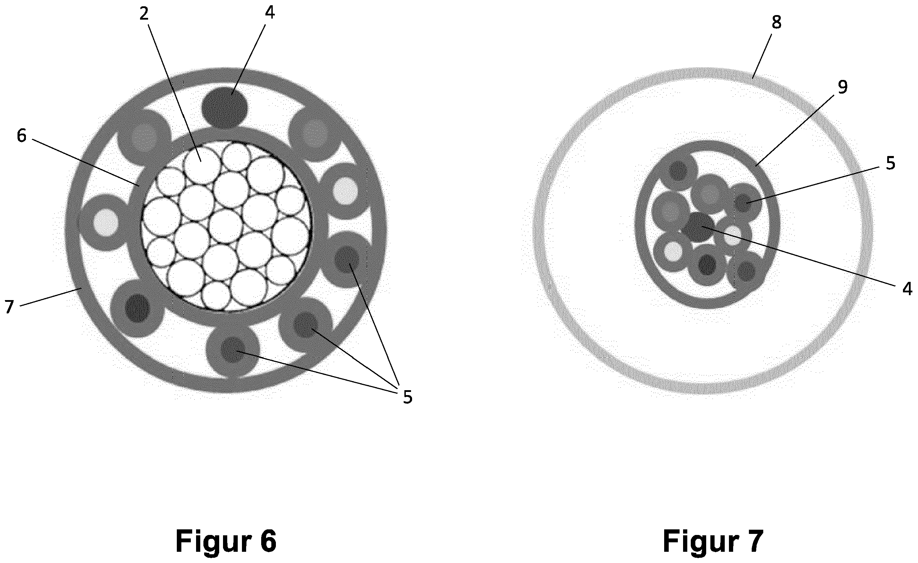

Figur 6 zeigt eine Einziehvorrichtung eines zweiten Ausführungsbeispiels in einem Querschnitt. Im zweiten Ausführungsbeispiel ist der Vorschubstrang 2, der wieder als Drahtseil gebildet ist, über seine gesamte Länge mit einer Hülle 6 ummantelt. Die Messeinrichtung befindet sich außerhalb der Hülle 6, und auch die Anschlussleitungen 15 des Vibrators 10 verlaufen außerhalb der Hülle 6. Ferner wird die gesamte Anordnung aus Vorschubstrang 2, Sensoren und Verbindungsleitungen außen von einer schlauchartigen äußeren Hülle 7 umgeben. Die Hülle 7 wirkt beim Einziehen als Schutzhülle für die Messeinrichtung. Vorteilhaft ist, wenn die Hülle 7 aus einem Material mit bezüglich der Führung 1 niedrigem Reibungskoeffizienten besteht, so dass die Gleiteigenschaften der Einziehvorrichtung verbessert werden. Die innere Hülle 6 kann vorteilhafterweise ebenfalls aus einem Material mit geringem Reibungskoeffizienten bestehen, um die Reibung zwischen dem Vorschubstrangs 2 und der Messeinrichtung zu verringern. Zusätzlich oder stattdessen ist es von Vorteil, wenn das Material der inneren Hülle 6 nur eine geringe elektrische Leitfähigkeit hat, so dass die Hülle 6 als elektrischer Isolator wirkt, um beispielsweise den Sensor 4, falls dieser eine supraleitende Messleitung aufweist, elektrisch vom Vorschubstrang 2 zu entkoppeln. Als Material der inneren Hülle 6 und/oder der äußeren Hülle 7 bietet sich beispielsweise PTFE an.

Figur 7 zeigt eine Einziehvorrichtung eines dritten Ausführungsbeispiels in einem Querschnitt. Im dritten Ausführungsbeispiel bildet ein Metallwellschlauch 8 den Vorschubstrang. Der Metallwellschlauch 8 ersetzt das Drahtseil der beiden anderen Ausführungsbeispiele. Der Metallwellschlauch 8 umgibt die Messeinrichtung, von der stellvertretend der Sensor 4 und die Verbindungsleitungen 5 erkennbar sind, und die Anschlussleitungen 15. Die Messeinrichtung kann über ihre gesamte Länge oder zumindest abschnittsweise von einer inneren Hülle 9 umgeben sein. Die innere Hülle 9 ist vorteilhafterweise aus einem Material mit geringem Reibungskoeffizienten gebildet, um Relativbewegungen zum Metallwellschlauch 8 zu erleichtern. Um die thermische Kopplung mit dem Fluid zu verbessern, kann der Metallwellschlauch 8 mit Durchbrechungen aufweisen, beispielsweise perforiert und/oder geschlitzt sein, um die Messeinrichtung thermisch möglichst gut mit dem Fluid zu koppeln. Zur Verbesserung der thermischen Kopplung kann auch die innere Hülle 9 Durchbrechungen aufweisen, beispielsweise perforiert und/oder geschlitzt sein.

### Bezugszeichen:

- 1: Führung
- 2: Vorschubstrang
- 3: Sensor
- 4: Sensor
- 5: Verbindungsleitung
- 6: innere Hülle
- 7: äußere Hülle
- 8: Vorschubstrang, Vorschubschlauch
- 9: innere Hülle
- 10: Vibrator
- 11: Motor
- 12: Schwungmasse
- 13: Gehäuseumfangswand
- 14: vorderer Gehäuseendabschnitt
- 15: Verbindungsleitung
- 16: Schweißverbindung
- 17: Schweißverbindung
- 18: Pressverbindung
- 19: -
- 20: Vorschubmotor
- 21: Steuerung und/oder -regelung
- 22: Anschlag

- A: Außenweite
- B: Außenweite
- D: Innenweite
- L: Länge
- V: Vorschubrichtung

## Patentansprüche

1. Vorrichtung zur Positionierung einer Messeinrichtung längs einer rohr- oder schlauchförmigen, mehrfach gewundenen Führung (1), die Vorrichtung umfassend:
1.1 einen elastisch biegsamen Vorschubstrang (2; 8) mit einer zum Aufbringen einer Vorschubkraft ausreichenden Schubsteifigkeit,
1.2 die Messeinrichtung (3, 4, 5) mit einem oder mehreren Sensoren (3, 4) jeweils zur Messung einer physikalischen oder chemischen Messgröße, beispielsweise Temperatur, Druck, Konzentration oder Füllstand, wobei der jeweilige Sensor (3, 4) mit dem Vorschubstrang (2; 8) derart verbunden ist, dass der Sensor (3, 4) Vorschubbewegungen des Vorschubstrangs (2; 8) mitmacht, **dadurch gekennzeichnet, dass** die Vorrichtung weiter umfasst:
1.3 einen Vibrator (10), der an einem vorderen Endabschnitt des Vorschubstrangs (2; 8) angeordnet und mit dem Vorschubstrang (2; 8) schubsteif verbunden (16; 17; 18) ist, so dass der Vorschubstrang (2; 8) und der Vibrator (10) einen Schubverbund (2, 10) bilden.

2. Vorrichtung nach dem vorhergehenden Anspruch, wobei der Vibrator (10) oder der Vorschubstrang (2; 8) ein freies vorderes Stirnende des Schubverbunds (2, 10), vorzugsweise der Vorrichtung, bildet und der Vibrator (10), falls der Vorschubstrang (2; 8) das freie vordere Stirnende bildet, hinter diesem vorderen Stirnende maximal um das Zwanzigfache oder Zehnfache einer quer zur Längsrichtung des Vorschubstrangs (2; 8) gemessen größten Außenweite (a; B) des Vibrators (10) zurücksteht.

3. Vorrichtung nach einem der vorhergehenden Ansprüche, wobei der Vibrator (10) einen Vibrationsaktuator (11, 12), wie etwa einen Linear-Resonanz-Aktuator, Hubmagnetspulen-Aktuator, Piezo-Aktuator oder vorzugsweise Exzentermotor, umfasst.

4. Vorrichtung nach einem der vorhergehenden Ansprüche, wobei der Vibrator (10) einen Vibrationsaktuator (11, 12) und ein den Vibrationsaktuator umgebendes Gehäuse (13, 14), beispielsweise ein patronen- oder kartuschenartiges Gehäuse, umfasst und das Gehäuse eine Umfangswand (13) und an diese anschließend einen vorderen Endabschnitt (14) aufweist, der sich rund konvex, beispielsweise sphärisch, vorwölbt und ein freies vorderes Stirnende des Gehäuses bildet.

5. Vorrichtung nach einem der vorhergehenden Ansprüche, wobei die Führung (1) einen Innenquerschnitt mit einer Innenweite D, vorzugsweise einen kreisförmigen Innenquerschnitt mit einem Innendurchmesser D, und der Vibrator (10) eine Außenweite (A; B) von wenigstens 0.2•D oder wenigstens 0.3•D und/oder eine größte Außenweite (A; B) von höchstens 0.6•D oder höchstens 0.5•D aufweisen.

6. Vorrichtung nach einem der vorhergehenden Ansprüche, wobei die Führung (1) einen Innenquerschnitt mit einer Innenweite D, vorzugsweise einen kreisförmigen Innenquerschnitt mit einem Innendurchmesser D, und der Vibrator (10) in einem Abstand von höchstens 0.1•D von seinem vorderen Stirnende eine Außenweite (A; B) von wenigstens 0.2•D oder wenigstens 0.3•D aufweisen.

7. Vorrichtung nach einem der vorhergehenden Ansprüche, wobei die Führung (1) einen Innenquerschnitt mit einer Innenweite D, vorzugsweise einen kreisförmigen Innenquerschnitt mit einem Innendurchmesser D, und der Vibrator (10) eine Länge (L) über Alles von höchstens 2•D aufweisen.

8. Vorrichtung nach einem der vorhergehenden Ansprüche, wobei der Vibrator (10) mit dem Vorschubstrang (2) mittels Schweißverbindung (16; 17) schubsteif verbunden ist, beispielsweise im Bereich des Außenumfangs des Vibrators (10) oder an der Rückseite des Vibrators (10).

9. Vorrichtung nach einem der vorhergehenden Ansprüche, wobei der Vibrator (10) einen Vibrationsaktuator (11, 12) und ein den Vibrationsaktuator umgebendes Gehäuse (13, 14), beispielsweise ein patronen- oder kartuschenartiges Gehäuse, umfasst und der Vorschubstrang (2) in Längsrichtung in das Gehäuse (13, 14) ragt und im Gehäuse (13, 14 mit dem Vibrator (10) gefügt ist, vorzugsweise mittels Pressverbindung (18).

10. Vorrichtung nach einem der vorhergehenden Ansprüche, wobei der Vorschubstrang (2) ein Drahtseil, vorzugsweise ein Metalldrahtseil, umfasst.

11. Vorrichtung nach einem der Ansprüche 1 bis 9, wobei der Vorschubstrang (8) einen elastisch biegsamen Vorschubschlauch (8) mit der zum Aufbringen der Vorschubkraft ausreichenden Schubsteifigkeit umfasst, beispielsweise einen Metallwellschlauch, und der Vorschubschlauch (8) die Messeinrichtung (3, 4, 5) und Anschlussleitungen (15) für den Vibrator (10), optional auch einen Längenabschnitt des Vibrators (10), umhüllt.

12. Vorrichtung nach einem der vorhergehenden Ansprüche, wobei die Vorrichtung als Einziehvorrichtung zum Einziehen der Messeinrichtung (3, 4, 5) in die Führung (1) verwendet wird und sich die Führung (1) in einem Behälter für ein Fluid, vorzugsweise eine kryogene Flüssigkeit, wie etwa Flüssigwasserstoff, erstreckt.

13. Verfahren zur Positionierung einer Messeinrichtung in einer rohr- oder schlauchförmigen Führung (1), bei dem:
13.1 ein elastisch biegsamer Vorschubstrang (2; 8) mit einer zum Aufbringen einer Vorschubkraft ausreichenden Schubsteifigkeit bereitgestellt wird,
13.2 ein oder mehrere Sensoren (3, 4) der Messeinrichtung (3, 4, 5) jeweils zur Messung einer physikalischen oder chemischen Messgröße, beispielsweise Temperatur, Druck, Konzentration oder Füllstand, mit dem Vorschubstrang (2; 8) verbunden wird oder werden, so dass die Messeinrichtung (3, 4, 5) Vorschubbewegungen des Vorschubstrangs (2; 8) mitmacht, **dadurch gekennzeichnet, dass**
13.3 ein Vibrator (10) an einem in Vorschubrichtung (V) vorderen Endabschnitt des Vorschubstrangs (2; 8) angeordnet und mit dem Vorschubstrang (2; 8) schubsteif gefügt wird, wobei der Vibrator (10) vorzugsweise ein freies vorderes Stirnende des Vorschubstrangs (2; 8) bildet,
13.4 die Vorrichtung mit einem freien vorderen Stirnende, vorzugsweise einem freien vorderen Stirnende des Vibrators (10), voran in die Führung (1) eingeführt und in Vorschubrichtung (V) vorgeschoben wird, und
13.5 der Vibrator (10) bei dem Vorschieben des Vorschubstrangs (2; 8) mittels elektrischer Energie in Vibration versetzt wird.

14. Verfahren nach dem vorhergehenden Anspruch, bei dem
14.1 der Vorschubstrang (2; 8) und damit gemeinsam die Messeinrichtung (3, 4, 5) mittels einer Vorschubeinrichtung (20, 21) mit einer Vorschubkraft in der Führung (1) vorgeschoben wird, und
14.2 die Vorschubeinrichtung (20, 21) auf Einhaltung einer vorgegebenen Vorschubgeschwindigkeit gesteuert oder geregelt wird.

15. Verfahren nach dem vorhergehenden Anspruch, bei dem der Vorschubeinrichtung (20, 21) eine maximale Vorschubkraft vorgegeben und die Vorschubeinrichtung beim Vorschieben des Vorschubstrangs (2) so gesteuert oder geregelt wird, dass die maximale Vorschubkraft nicht überschritten wird.

## Claims

1. A device for positioning a measuring device along a tubular multiple-winding guide (1), the device comprising:
1.1 an elastically flexible advancing strand (2; 8) which exhibits a shear resistance sufficient for providing an advancing force; and
1.2 the measuring device (3, 4, 5) which comprises one or more sensors (3, 4), each for measuring a physical or chemical measurement variable, for example temperature, pressure, concentration or level, wherein the respective sensor (3, 4) is connected to the advancing strand (2; 8) in such a way that the sensor (3, 4) participates in advancing movements of the advancing strand (2; 8),
**characterised in that**
1.3 the device further comprises a vibrator (10) which is arranged on a front end portion of the advancing strand (2; 8) and connected in a shear-resistant connection (16; 17; 18) to the advancing strand (2; 8), such that the advancing strand (2; 8) and the vibrator (10) form a shear composite (2, 10).

2. The device according to the preceding claim, wherein the vibrator (10) or the advancing strand (2; 8) forms a free front facing end of the shear composite (2, 10), preferably of the device, and wherein if the advancing strand (2; 8) forms the free front facing end, the vibrator (10) is short of this front facing end by at most twenty times or ten times a maximum outer width (A; B) of the vibrator (10) as measured transversely with respect to the longitudinal direction of the advancing strand (2; 8).

3. The device according to any one of the preceding claims, wherein the vibrator (10) comprises a vibration actuator (11, 12), such as for example a linear resonance actuator, a solenoid coil actuator, a piezo actuator or preferably an eccentric motor.

4. The device according to any one of the preceding claims, wherein the vibrator (10) comprises a vibration actuator (11, 12) and a housing (13, 14), for example a cartridge-like housing, which surrounds the vibration actuator (11, 12), and wherein the housing (13, 14) comprises a circumferential wall (13) and, adjoining it, a front end portion (14) which protrudes in a round convex bulge, for example spherically, and forms a free front facing end of the housing (13, 14).

5. The device according to any one of the preceding claims, wherein the guide (1) exhibits an inner cross-section having an inner width D, preferably a circular inner cross-section having an inner diameter D, and the vibrator (10) exhibits an outer width (A; B) of at least 0.2 × D or at least 0.3 × D and/or a maximum outer width (A; B) of at most 0.6 × D or at most 0.5 × D.

6. The device according to any one of the preceding claims, wherein the guide (1) exhibits an inner cross-section having an inner width D, preferably a circular inner cross-section having an inner diameter D, and the vibrator (10) exhibits an outer width (A; B) of at least 0.2 × D or at least 0.3 × D at a distance of at most 0.1 × D from its front facing end.

7. The device according to any one of the preceding claims, wherein the guide (1) exhibits an inner cross-section having an inner width D, preferably a circular inner cross-section having an inner diameter D, and the vibrator (10) exhibits an overall length (L) of at most 2 × D.

8. The device according to any one of the preceding claims, wherein the vibrator (10) is connected in a shear-resistant connection to the advancing strand (2) by means of a welded connection (16; 17), for example in the region of the outer circumference of the vibrator (10) or on the rear side of the vibrator (10).

9. The device according to any one of the preceding claims, wherein the vibrator (10) comprises a vibration actuator (11, 12) and a housing (13, 14), for example a cartridge-like housing, which surrounds the vibration actuator (11, 12), and wherein the advancing strand (2) protrudes into the housing (13, 14) in the longitudinal direction and is joined to the vibrator (10) in the housing (13, 14), preferably by means of a press-fit connection (18).

10. The device according to any one of the preceding claims, wherein the advancing strand (2) comprises a wire cable, preferably a metal wire cable.

11. The device according to any one of claims 1 to 9, wherein the advancing strand (8) comprises an elastically flexible advancing tube (8) which exhibits a shear resistance sufficient for providing the advancing force, for example a corrugated metal tube, and wherein the advancing tube (8) envelops the measuring device (3, 4, 5) and connecting lines (15) for the vibrator (10) and optionally also a longitudinal portion of the vibrator (10).

12. The device according to any one of the preceding claims, wherein the device is used as a drawing-in device for drawing the measuring device (3, 4, 5) into the guide (1) and the guide (1) extends in a container for a fluid, preferably a cryogenic liquid such as for example liquid hydrogen.

13. A method for positioning a measuring device in a tubular guide (1), wherein:
13.1 an elastically flexible advancing strand (2; 8) which exhibits a shear resistance sufficient for providing an advancing force is provided; and
13.2 one or more sensors (3, 4) of the measuring device (3, 4, 5), each for measuring a physical or chemical measurement variable, for example temperature, pressure, concentration or level, is/are connected to the advancing strand (2; 8), such that the measuring device (3, 4, 5) participates in advancing movements of the advancing strand (2; 8),
**characterised in that**
13.3 a vibrator (10) is arranged on an end portion of the advancing strand (2; 8) which is a front end portion in the advancing direction (V) and is joined in a shear-resistant connection to the advancing strand (2; 8), wherein the vibrator (10) forms a free front facing end of the advancing strand (2; 8),
13.4 the device is inserted into the guide (1) with a free front facing end, preferably a free front facing end of the vibrator (10), first and advanced in the advancing direction (V), and
13.5 the vibrator (10) is caused to vibrate by means of electrical energy as the advancing strand (2; 8) is advanced.

14. The method according to the preceding claim, wherein:
14.1 the advancing strand (2; 8) and together with it the measuring device (3, 4, 5) is advanced in the guide (1) by means of an advancing force of an advancing device (20, 21); and
14.2 the advancing device (20, 21) is controlled or regulated so as to maintain a specified advancing speed.

15. The method according to the preceding claim, wherein a maximum advancing force of the advancing device (20, 21) is specified and the advancing device (20, 21) is controlled or regulated, as the advancing strand (2) is advanced, such that the maximum advancing force is not exceeded.

## Revendications

1. Dispositif de positionnement d'un dispositif de mesure le long d'un guidage (1) tubulaire ou en forme de tuyau enroulé à plusieurs reprises, le dispositif de positionnement comprenant :
1.1 une corde d'avancement élastiquement flexible (2 ; 8) présentant une rigidité au cisaillement suffisante pour appliquer une force d'avancement ; et
1.2 le dispositif de mesure (3, 4, 5) comportant un ou plusieurs capteurs (3, 4), chacun pour mesurer une grandeur de mesure physique ou chimique, par exemple la température, la pression, la concentration ou le niveau de remplissage, le capteur respectif (3, 4) étant relié à la corde d'avancement (2 ; 8), de telle sorte que le capteur (3, 4) suit des mouvements d'avancement de la corde d'avancement (2 ; 8),
**caractérisé en ce que**
1.3 le dispositif comprend en outre un vibrateur (10) disposé sur une section d'extrémité avant de la corde d'avancement (2 ; 8) et relié à la corde d'avancement (2 ; 8) de manière résistante au cisaillement (16 ; 17 ; 18), de sorte que la corde d'avancement (2 ; 8) et le vibrateur (10) forment un ensemble de cisaillement (2, 10).

2. Dispositif selon la revendication précédente, le vibrateur (10) ou la corde d'avancement (2 ; 8) formant une extrémité frontale avant libre de l'ensemble de cisaillement (2, 10), de préférence du dispositif, et si la corde d'avancement (2 ; 8) forme l'extrémité frontale avant libre, le vibrateur (10) étant en retrait par rapport à cette extrémité frontale avant d'un maximum de vingt fois ou dix fois une largeur extérieure maximale (A ; B) du vibrateur (10) mesurée transversalement à la direction longitudinale de la corde d'avancement (2 ; 8).

3. Dispositif selon l'une quelconque des revendications précédentes, le vibrateur (10) comprenant un actionneur vibrant (11, 12), tel qu'un actionneur à résonance linéaire, un actionneur à bobine d'aimant de levage, un actionneur piézoélectrique ou de préférence un moteur excentrique.

4. Dispositif selon l'une quelconque des revendications précédentes, le vibrateur (10) comprenant un actionneur vibrant (11, 12) et un boîtier (13, 14) entourant l'actionneur vibrant (11, 12), par exemple du type cartouche, le boîtier (13, 14) comportant une paroi circonférentielle (13) et une section d'extrémité avant (14) adjacente à la paroi circonférentielle (13) et se renflant en avant sous forme ronde et convexe, par exemple sphérique, et formant une extrémité frontale avant libre du boîtier (13, 14).

5. Dispositif selon l'une quelconque des revendications précédentes, le guidage (1) présentant une section transversale intérieure d'une largeur intérieure D, de préférence une section transversale intérieur circulaire d'un diamètre intérieur D, le vibrateur (10) présentant une largeur extérieure (A ; B) d'au moins 0,2 • D ou d'au moins 0,3 • D et / ou une largeur extérieure maximale (A ; B) d'au plus 0,6 • D ou d'au plus 0,5 • D.

6. Dispositif selon l'une quelconque des revendications précédentes, le guidage (1) présentant une section transversale intérieure d'une largeur intérieure D, de préférence une section transversale intérieure circulaire d'un diamètre intérieur D, le vibrateur (10) présentant une largeur extérieure (A ; B) d'au moins 0,2 • D ou d'au moins 0,3 • D à une distance d'au plus 0,1 • D à partir de son extrémité frontale avant.

7. Dispositif selon l'une quelconque des revendications précédentes, le guidage (1) présentant une section transversale intérieure d'une largeur intérieure D, de préférence une section transversale intérieure circulaire d'un diamètre intérieur D, le vibrateur (10) présentant une longueur (L) hors tout d'au plus 2 • D.

8. Dispositif selon l'une quelconque des revendications précédentes, le vibrateur (10) étant relié à la corde d'avancement (2) de manière résistante au cisaillement au moyen d'une liaison soudée (16 ; 17), par exemple dans la zone de la circonférence extérieure du vibrateur (10) ou à l'arrière du vibrateur (10).

9. Dispositif selon l'une quelconque des revendications précédentes, le vibrateur (10) comprenant un actionneur vibrant (11, 12) et un boîtier (13, 14) entourant l'actionneur vibrant (11, 12), par exemple du type cartouche, la corde d'avancement (2) faisant saillie en direction longitudinale dans le boîtier (13, 14) et étant assemblée au vibrateur (10) dans le boîtier (13, 14), de préférence au moyen d'une liaison par compression (18).

10. Dispositif selon l'une quelconque des revendications précédentes, la corde d'avancement (2) comprenant un câble en fil, de préférence un câble en fil métallique.

11. Dispositif selon l'une quelconque des revendications 1 à 9, la corde d'avancement (8) comprenant un tuyau d'avancement (8) élastiquement flexible présentant la rigidité au cisaillement suffisante pour appliquer la force d'avancement, par exemple un tuyau en métal ondulé, le tuyau d'avancement (8) enveloppant le dispositif de mesure (3, 4, 5) et des conduites de raccordement (15) pour le vibrateur (10), éventuellement également une section longitudinale du vibrateur (10).

12. Dispositif selon l'une quelconque des revendications précédentes, le dispositif étant utilisé comme dispositif d'insertion pour insérer le dispositif de mesure (3, 4, 5) dans le guidage (1), le guidage (1) s'étendant à l'intérieur d'un récipient pour un fluide, de préférence un liquide cryogénique, tel que l'hydrogène liquide.

13. Procédé de positionnement d'un dispositif de mesure à l'intérieur d'un guidage (1) tubulaire ou en forme de tuyau, comprenant les étapes suivantes :
13.1 une corde d'avancement élastiquement flexible (2 ; 8) présentant une rigidité au cisaillement suffisante pour appliquer une force d'avancement est fournie, et
13.2 un ou plusieurs capteurs (3, 4) du dispositif de mesure (3, 4, 5), chacun pour mesurer une grandeur de mesure physique ou chimique, par exemple la température, la pression, la concentration ou le niveau de remplissage, sont reliés à la corde d'avancement (2 ; 8), de sorte que le dispositif de mesure (3, 4, 5) suit les mouvements d'avancement de la corde d'avancement (2 ; 8),
**caractérisé en ce que**
13.3 un vibrateur (10) est disposé sur une section d'extrémité de la corde d'avancement (2 ; 8), qui est une section d'extrémité avant en direction d'avancement (V), et assemblé à la corde d'avancement (2 ; 8) de manière résistante au cisaillement, le vibrateur (10) formant de préférence une extrémité frontale avant libre de la corde d'avancement (2 ; 8),
13.4 le dispositif est inséré, une extrémité frontale avant libre la première, de préférence une extrémité frontale avant libre du vibrateur (10) la première, dans le guidage (1) et avancé en direction d'avancement (V), et
13.5 le vibrateur (10) est amené à vibrer au moyen d'énergie électrique lorsque la corde d'avancement (2 ; 8) avance.

14. Procédé selon la revendication précédente, comprenant les étapes suivantes :
14.1 la corde d'avancement (2 ; 8) ainsi que le dispositif de mesure (3, 4, 5) sont avancés à l'intérieur du guidage (1) au moyen d'une force d'avancement d'un dispositif d'avancement (20, 21), et
14.2 le dispositif d'avancement (20, 21) est commandé ou régulé pour maintenir une vitesse d'avancement prédéterminée.

15. Procédé selon la revendication précédente, une force d'avancement maximale du dispositif d'avancement (20, 21) étant prédéterminée et le dispositif d'avancement (20, 21) étant commandé ou régulé, lorsque la corde d'avancement (2) avance, de sorte que la force d'avancement maximale n'est pas dépassée.
